# EUROPÄISCHE PATENTSCHRIFT

(11) **EP 1 034 666 B1**
(45) Veröffentlichungstag und Bekanntmachung des Hinweises auf die Patenterteilung: **28.08.2002**
(21) Anmeldenummer: 98961065.4
(22) Anmeldetag: 02.11.1998
(51) Int. Cl.: H04Q 3/00

(54) **VERFAHREN UND VORRICHTUNG ZUM AUSTAUSCH ANWENDUNGSSPEZIFISCHER DATEN IN EINEM INTELLIGENTEN NETZ**
METHOD AND DEVICE FOR EXCHANGING APPLICATION-SPECIFIC DATA IN AN INTELLIGENT NETWORK
PROCEDE ET DISPOSITIF POUR ECHANGER DES DONNEES ORIENTEES SPECIFIQUEMENT UTILISATION DANS UN RESEAU INTELLIGENT

(30) Priorität: 27.11.1997 DE 19752607
(43) Veröffentlichungstag der Anmeldung: 13.09.2000
(73) Patentinhaber: SIEMENS AKTIENGESELLSCHAFT, 80333 München (DE)
(72) Erfinder: KREPPEL, Jan, D-82377 Penzberg (DE)
(86) Internationale Anmeldenummer: DE9803196
(87) Internationale Veröffentlichungsnummer: WO99029119

(56) Entgegenhaltungen:
- EP-A- 0 726 682
- WO-A-97/37498

## Beschreibung

Die Erfindung betrifft ein Verfahren und eine Vorrichtung zum Austausch anwendungsspezifischer Daten in einem Intelligenten Netz zwischen einem Endgerät und einer zur Ausführung von Diensten des Netzes vorgesehenen Dienststeuerstation, welche zum Datenaustausch ein Dienstprotokoll verwendet.

In einem Intelligenten Telekommunikationsnetz sind neben den Grunddiensten, wie z.B. dem Telefon- und Facsimiledienst eines Telefonnetzes, weitere Dienste eingerichtet, die von einem Teilnehmer des Intelligenten Netzes angesprochen werden können. Diese Dienste können beispielsweise Zusatzdienste zu den Grunddiensten sein, z.B. eine Anrufumleitung, verwaltungsorientierte Dienste, z.B. ein Abfrage der aufgelaufenen Gesprächsgebühren eines Teilnehmers, oder auf die Grunddienste aufbauende Anwendungsdienste sein, z.B. ein Bankbuchungsdienst, bei dem über Telefon Buchungsvorgänge und andere Banktransaktionen durchgeführt und protokolliert werden. Für die Verwaltung und Durchführung der Dienste ist im Intelligenten Netz eine Dienststeuerstation, ein sogenannter SCP (service control point), vorgesehen.

Der Zugriff auf die Dienststeuerstation und seine Dienste erfolgt gewöhnlich durch den Betreiber des Intelligenten Netzes über eigene Terminals. Der Datenaustausch in einem Intelligenten Netz zwischen einem Endgerät eines Teilnehmers des Intelligenten Netzes und der Dienststeuerstation ist bisher nur in eingeschränktem Ausmaß möglich. Für Teilnehmerdienste eines Intelligenten Netzes wird in der Regel für die Übertragung von Daten zur Dienststeuerstation eine DTMF-Schnittstelle (Doppelton-Multifrequenz-Verfahren) genutzt, bei der lediglich Ziffern und einige wenige Sonderzeichen gesendet werden können; in der Gegenrichtung sind aufgrund der Beschränkung der Nachrichten auf das "Sprachband" nur Ansagen möglich. In einem GSM-Netz kann USSD (unstructured supplementary service data) genutzt werden. Hierbei handelt es sich um eine spezielle Signalisierung von dem Endgerät aus. Diese Lösung hat jedoch den Nachteil, daß sie nicht netzübergreifend anwendbar ist und auch nur dann innerhalb eines GSM-Netzes nutzbar ist, wenn die Funktionalität des USSD in jedem Netzknoten homogen zur Verfügung steht, da die USSD-Protokolle nicht zwischen den Netzknoten transportierbar sind. Weiterhin ist es möglich, über Datennetze auf die Dienststeuerstation zuzugreifen. Hierbei können allerdings weder Echtzeitanforderungen erfüllt werden, noch hohe Transaktionsraten erzielt werden. Jedoch kann derzeit davon ausgegangen werden, daß in Zukunft eine sehr hohe Anzahl von Netzteilnehmern Dienste eines Intelligenten Netzes in Anspruch nimmt und daher einen effizienten Zugang zu den Dienstparametern benötigt. Zudem stellt der Zugang zumeist hohe Anforderungen an die Endgeräte.

Aus EP-A-0726682 ist ein Verfahren zum Austausch anwendungsspezifischer Daten in einem intelligenten Netz zwischen einem Endgerät und einer zur Ausführung von Diensten des Netzes vorgesehenen Dienstesteuerungsstation, welche zum Datenaustausch ein Dienstprotokoll verwendet, bekannt.
Aus der WO-A-97/37498 ist ein weiteres Verfahren zum Austausch anwendungsspezifischer Daten, insbesondere Daten betreffend über ein Standardprotokoll hinausgehender Funktionen, in einem intelligenten Netz zwischen einem Endgerät und einer Dienstesteuerungsstation bekannt.

Es ist deshalb Aufgabe der Erfindung, eine besondere Implementierung einer Datenumsetzfunktion, die auf einer Dienstfunktion der Dienstesteuerstation basiert, zu realisieren.

Datenfähige Endgeräte, für die ein solcher Datenaustausch ermöglicht werden soll, sind beispielsweise multifunktionelle Mobiltelefone, telekommunikationsfähige Kleinstrechner wie etwa ein GSM-fähiger PDA (personal digital assistant), ein PC (Personal Computer) mit Wählmodem oder ISDN-Adapter, usw.

Diese Aufgabe wird ausgehend von dem eingangs genannten Verfahren durch ein Verfahren gemäß dem Anspruch 1 gelöst, bei welchem erfindungsgemäß der Datenaustausch in dem Netz über eine Datenumsetzfunktion erfolgt, welche
- vom Endgerät gesendete Daten empfängt, in das dem Dienstprotokoll entsprechendes Datenformat umsetzt und an die Dienststeuerstation sendet, sowie
- Daten in dem Dienstprotokoll von der Dienststeuerstation empfängt, in ein von dem Endgerät auswertbares Datenformat umsetzt und an das Endgerät sendet.

Diese Lösung gestattet unter anderem eine schnelle und direkte Zugriffsmöglichkeit auf Diensteparameter. Im Gegensatz zu einer Anbindung über Datennetze, z.B. Internet, ist die Antwortzeit nunmehr durch die Dienststeuerstation vorgegeben und beträgt somit im allgemeinen Sekundenbruchteile. Weiters ist die Einschränkung des verwendbaren Zeichensatzes auf z.B. Ziffern bei dem DTMF-Verfahren aufgehoben. Der Datenaustausch kann an das verwendete Endgerät angepaßt werden, ohne in die Dienststeuerstation selbst eingreifen zu müssen. Nicht zuletzt kann dieses Verfahren netzübergreifend eingesetzt werden, da Verbindungen zu anderen Netzen gleichermaßen wie zu Endgeräten behandelt werden können.

In einer bevorzugten Ausführungsform der Erfindung führt eine Vermittlungsstation des Netzes und/oder eine ihr zugeordnete Vorrichtung die Datenumsetzfunktion aus. Dadurch kann der Standort der Datenumsetzung möglichst nahe zu dem Endgerät gerückt werden. Innerhalb des Netzes erfolgt die weitere Signalisierung über das Dienstprotokoll; insbesondere ist die Dienststeuerstation ist von der Verwaltung der Terminal-Protokolle entlastet.

Hierbei ist es besonders günstig, wenn die Datenumsetzfunktion als eine Diensthilfsfunktion der Vermittlungsstation abläuft. Diensthilfsfunktionen sind als 'service resource functions' (SRF) zur Durchführung von Aufgaben einer Vermittlungsstation bekannt.

Eine weitere Ausführungsvariante erzielt vorteilhafterweise eine höhere Flexibilität hinsichtlich der einsetzbaren Endgeräte und deren Protokolle dadurch, daß die Kommunikation der Datenumsetzfunktion mit dem Endgerät mittels eines Intelligenten Peripheriegerätes erfolgt.

Es ist weiters für die Flexibilität vorteilhaft, wenn die Datenumsetzfunktion eine Zuordnungsfunktion zum Umsetzen des Dienstprotokolles und des Datenformats des Endgerätes ineinander verwendet.

Vorteilhafterweise kann in dem Endgerät eine Anwendung betrieben werden, die mit in der Dienststeuerstation ablaufenden Diensten Daten austauscht. Dies war bisher infolge der unsymmetrischen und/oder eingeschränkten Datenaustausch-Protokolle weitgehend ausgeschlossen.

Es ist zudem günstig und vereinfacht den Aufbau der Verbindung zwischen der Dienststeuerstation und dem Endgerät, wenn die Datenumsetzfunktion von der Dienststeuerstation aktiviert wird.

Die oben genannte Aufgabe wird weiters durch eine Vorrichtung gemäß dem Anspruch 8 gelöst.

Die durch diese Lösung erbrachten Vorteile wurden bereits bei dem erfindungsgemäßen Verfahren weiter oben dargestellt.

Eine bevorzugte Ausführungsform der erfindungsgemäßen Vorrichtung ist in einer Vermittlungsstelle des Netzes vorgesehen oder dieser zugeordnet. Wie bereits weiter oben dargestellt wurde, kann dadurch der Standort der Datenumsetzung möglichst nahe zu dem Endgerät gerückt werden.

Bei einer weiteren vorteilhaften Ausführungsvariante ist zur Steigerung der Flexibilität hinsichtlich der einsetzbaren Endgeräte und deren Protokolle als periphere Sende- und Empfangseinrichtung ein Intelligentes Peripheriegerät eingerichtet.

Es ist weiters für die Flexibilität vorteilhaft, wenn eine Zuordnungsvorrichtung zum Umsetzen des Dienstprotokolles und des Datenformats des Endgerätes ineinander vorgesehen ist.

Es ist zudem günstig für einen vereinfachten Verbindungsaufbau zwischen der Dienststeuerstation und dem Endgerät, wenn die erfindungsgemäße Vorrichtung von der Dienststeuerstation aktivierbar ist.

Die Erfindung wird im folgenden anhand eines Ausführungsbeispieles für ein Intelligentes Netz mit ETSI Core-INAP-Protokoll näher erläutert, wobei die in der beigelegten Figur gezeigte Übersicht der hierarchischen Ebenen des Datenaustausches zwischen dem Endgerät und der Dienststeuerstation herangezogen wird.

Nach der Erfindung sind zur Anbindung eines datenfähigen Endgerätes TEG der obengenannten Art Datenumsetzfunktionen DMF vorgesehen. Diese können als eigene Vorrichtungen den Vermittlungsstationen des Intelligenten Netzes, den sogenannten SSP (service switching points), zugeordnet werden; in diesem Beispiel werden sie als spezielle Diensthilfsfunktionen der Vermittlungsstation implementiert. Die Datenumsetzfunktion DMF wird von der Dienststeuerstation über die netzinterne Datenaustausch-Protokoll DAP gesteuert. In dem vorliegenden Ausführungsbeispiel ist dieses Dienstprotokoll DAP das ETSI Core-INAP in der CS1-Version. Für Details bezüglich des INAP-Protokolls sei hier auf die Standards des ETSI-Institutes, insbesondere "Intelligent Network (IN); Intelligent Network Capability Set 1 (CS1), Core Intelligent Network Application Protocol (INAP), Part 1: Protocol Specification", De/SPS-03015, Draft prETS 300 374-1, Nov. 93 1 verwiesen.

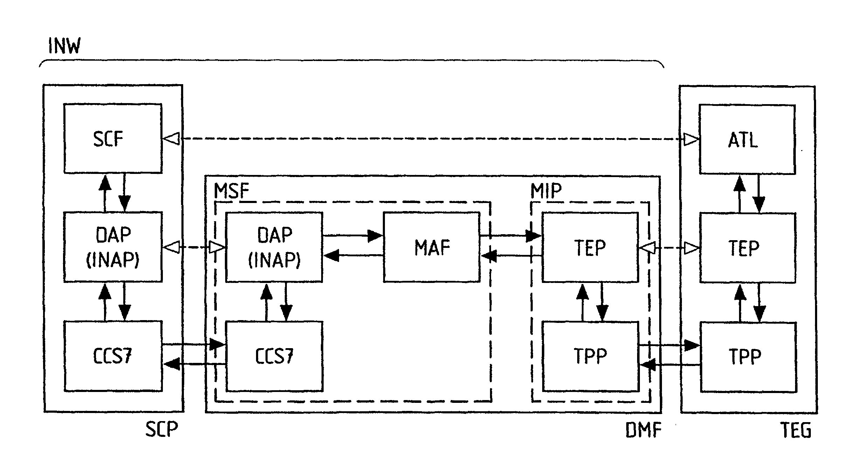

Zum Endgerät TEG hin bieten die Datenumsetzfunktionen DMF die benötigte Schnittstelle, nämlich eine Signalisierungsschnittstelle TPP sowie ein darauf aufgesetztes Terminal-Protokoll TEP, z.B. VT100. Im Sinne der Hierarchie der Datenübertragung entspricht das Terminal-Protokoll TEP dem Dienstprotokoll DAP, indem Beispiel also dem INAP-Protokoll; die darunterliegenden Signalisierungsschnittstelle TPP des Endgerätes entspricht dem unter INAP verwendeten Signalisierungssystem CCS7. Die Abbildung zwischen dem Dienstprotokoll DAP einerseits und dem peripheren Protokoll TEP andererseits findet über Zuordnungsfunktion MAF ('mapping function') statt, die der Datenumsetzfunktion DMF zur Verfügung steht. Die Datenumsetzfunktion DMF stellt Funktionen bereit, um zum Endgerät TEG hin das Datenübertragungsprotokoll TPP,TEP und auf diesem aufbauend ein Applikationsprotokoll ATL zu realisieren. Zu der Dienststeuerstation hin wird dieses Applikationsprotokoll auf das Protokoll der Dienstfunktion SCF der Dienststeuerstation abgebildet. Dadurch sind für die Kommunikation zwischen der Anwendung ATL des Endgerätes TEG und der Dienstfunktion SCF der Dienststeuerstation die dazwischen liegenden Komponenten, die ja in der Datenaustausch-Hierarchie untergeordnet sind, auf der Anwendungsebene transparent. In der Figur ist dies durch die offenen Pfeile angedeutet. Die Modellierung der benötigten Anwendungsdienste SCF geschieht im Intelligenten Netz mit den einheitlichen Mitteln des verwendeten Datenaustausch-Protokolls DAP, in dem Beispiel der INAP-Schnittstelle und den dafür zur Verfügung stehenden Dienstbausteinen (SIB, service-independent building blocks).

Eine Datenumsetzfunktion DMF wird beispielsweise dadurch aktiviert, daß sie im Laufe eines Dialogs im Intelligenten Netz bei dem Aufbau einer Verbindung zwischen dem Dienst SCF und dem Endgerät TEG eingeschleift wird, z.B, unter Zuhilfenahme einer Unterstützungsfunktion einer Vermittlungsstation in einer sogenannten Assist- oder Handoff-Prozedur. Danach wird die Verbindung durch den Dienst SCF hergestellt. Für einen fehlerfreien Ablauf ist es nun notwendig, daß der Umsetzfunktion DMF mitgeteilt wird, welche Übertragungsprotokolle TEP zur Anbindung des Endgerätes TEG verwendbar bzw. notwendig sind. Die Dienstfunktion SCF kann dies aus der 'InitialDetectionPoint'-Nachricht des INAP-Protokolls ableiten, die zur Abfrage der Eigenschaften von Netzteilnehmern dient. Zu diesem Zweck ist in das INAP-Protokoll eine Erweiterung der sogenannten 'ConnectToResource'-Operation aufzunehmen, nämlich ein zusätzlicher Parameter, der die erforderlichen Angaben über die Endgeräte und Datenübertragungsprotokolle liefert. Hierbei können unter anderem die Informationselemente verwendet werden, die auch zur Zwischenamtssignalisierung verwendet werden, z.B. nach ISUP ('ISDN user part'), siehe hierzu etwa den ITU-Standard Q.763 "Formats and Codes of the ISDN User Part of Signalling System No. 7".

Anschließend können zwischen der Anwendung ATL des Endgerätes und dem Dienst SCF der Dienststeuerstation Daten über die Umsetzfunktion DMF ausgetauscht werden. Beispielsweise können Interaktionen zwischen dem Teilnehmer TEG und der Umsetzfunktion DMF stattfinden, die, z.B. in den sogenannten 'PromptAndCollect'-Aufrufen des CS1, sukzessive durch die Dienststeuerstation initiiert werden und von der Umsetzfunktion DMF zu der Dienststeuerstation quittiert werden. Hierbei können Daten zwischen Dienststeueratation und Umsetzfunktion DMF ausgetauscht werden.

In der technischen Realisierung wird die Datenumsetzfunktion DMF vorteilhafterweise in eine Protokollmaschine MSF zu der Dienststeuerstation hin und ein Intelligentes Peripheriegerät MIP zu dem Endgerät TEG hin aufgespalten, welche die entsprechenden Sende- und Empfangsfunktionen an den Schnittstellen zu der Dienststeuerstation SCP bzw. dem Endgerät TEG erfüllen. Als Schnittstelle des Peripheriegerätes MIP wird im allgemeinen ein ISDN-Endgeräte-Anschluß verwendet. Das Intelligente Peripheriegerät kann in besonderen Fällen auch innerhalb einer Diensthilfsfunktion realisiert sein.

Über die netzseitige Schnittstelle zwischen Datenumsetzfunktion DMF und Dienststeuerstation werden hauptsächlich Prompt-Nachrichten, z.B. in CS1 als 'PromptAndCollect'-Befehl, gesendet. Innerhalb dieser Prompts werden beispielsweise für die Kommunikation mit der Umsetzfunktion DMF vordefinierte Textbausteine verwendet oder über das Endgerät TEG zu sendende Texte übermittelt. Die Umsetzfunktion leitet die Prompts an das Endgerät TEG weiter und wartet auf eine Antwort, z.B. eine Eingabe des Teilnehmers. Sobald eine Nachricht vom Endgerät TEG eintrifft, wird diese von der Umsetzfunktion DMF auf die Schnittstelle DAP zur Dienststeuerstation SCP abgebildet, d.h. über das INAP-Protokoll, im Beispiel als Resultat des 'PromptAndCollect'-Befehls an den Dienst SCF weitergeleitet.

Als weitere Möglichkeit kann zwischen der Dienststeuerstation und dem Endgerät TEG ein logisches Applikationsprotokoll eingezogen werden. Hierzu werden betreffend den Aufbau der ausgetauschten Textinformationen (Strings) genaue Festlegungen getroffen. Auf diese Weise kann auch eine Kommandosprache zur Verwaltung von Dienstparametern des intelligenten Netzes INW realisiert werden.

Auf der peripheren Schnittstelle zu dem Endgerät TEG hin sendet die Umsetzfunktion DMF die Prompts, die über das INAP-Protokoll von der Dienstfunktion SCF erhalten wurden, weiter. Dies kann z.B, auch in Form einfacher Textmenüs geschehen, insoweit diese von dem Endgerät unterstützt werden. Es sei hierbei nochmals darauf hingewiesen, daß der Datenaustausch seitens des Endgerätes über eine gewöhnliche Verbindung des Intelligenten Netzes INW, z.B. eine Telefonverbindung, erfolgt.

Als beispielhafte Anwendungsbereiche der Erfindung innerhalb eines Intelligenten Netzes seien genannt:
1)Menü-gesteuerte Benutzerdialoge für Dienstteilnehmer - z.B. das Registrieren und/oder Aktualisieren von Teilnehmerdaten, etwa zur Subskription eines Dienstes oder die Änderung von Rufnummern für eine Rufumleitung, sowie Abfragen während des Betriebes, beispielsweise betreffend den Kontostand eines Teilnehmerkontos oder aufgelaufene Gebühren. In besonderen Fällen können auch Anwendungen, z.B. auch Computerprogramme, auf dem Endgerät TEG betrieben werden, die über Abfragen oder Dialoge mit Anwendungsdiensten der Dienststeuerstation kommunizieren; dies kann im Rahmen eines logischen Anwendungsprotokoll wie oben beschrieben und/oder nach Art einer Client-Server-Relation erfolgen.
2)Anbindung externer Kontroll- und Steuersysteme oder externer Datenbanken. Dies eignet sich besonders für Dienste des Intelligenten Netzes, bei denen sich häufig und unter Umständen rasch ändernde Informationen benötigt werden, zu denen das System des Intelligenten Netzes selbst keinen unmittelbaren Zugang hat - z.B. ein Flottenmanagementsystem, bei dem für die Herstellung einer Verbindung zu einem Flottenfahrzeug Informationen über die Verfügbarkeit und den Aufenthaltsort des Fahrzeuges benötigt werden.
3)Versenden von Nachrichten durch die Dienstlogik. Hierbei können an bestimmter Stelle innerhalb eines Dienstes des Intelligenten Netzes Nachrichten, wie etwa Facsimile, E-mail (elektronische Post) oder Textnachrichten eines "Short Message Service", von der Dienststeuerstation gesendet werden - z.B. kann die Dienstlogik, wenn ein Teilnehmer nicht erreichbar ist, auf einen Befehl des Anrufenden hin eine Kurznachricht oder E-mail-Nachricht an den gerufenen Teilnehmer senden, die Informationen über die nicht zustandegekommene Verbindung enthält.
4)Verbindung zu Banken und Kreditkarteninstituten. Die Schnittstellen, die derzeit zur Online-Autorisierung von Buchungsvorgängen genutzt werden, sind sehr komplex und unterschiedlich gestaltet. Auch diese Funktion kann mit Hilfe einer erfindungsgemäßen Datenumsetzfunktion realisiert werden. Dadurch kann gegenüber der Dienststeuerstation der Autorisierungsvorgang über das INAP-Protokoll stark vereinfacht und vereinheitlicht werden. Beispielsweise sendet die Dienststeuerstation, nachdem er die Verbindung zwischen der Datenumsetzfunktion und der Autorisierungsstelle initiiert hat, eine Autorisierungsanfrage an die Datenumsetzfunktion. Diese wickelt das Autorisierungsprotokoll ab, eventuell in mehreren Einzelschritten, und sendet das positive oder negative Ergebnis an die Dienststeuerstation.

Mit der Erfindung wird eine schnelle und direkte Zugriffsmöglichkeit auf Diensteparameter erschlossen. Im Gegensatz zu einer Anbindung über Datennetze, z.B. Internet, wird diese Art des Zuganges über einen reservierten Kanal realisiert, d.h. die Kapazität der Datenübertragung steht während der gesamten Dauer der Verbindung zur Verfügung. Die Antwortzeit ist nunmehr durch die Dienststeuerstation vorgegeben und beträgt somit im allgemeinen Sekundenbruchteile. Die hohen erreichbaren Transaktionsraten gestatten somit auch den häufigen Zugriff auf Dienstparameter durch Netzteilnehmer.

Infolge der Verwendung eines Endgeräteprotokolles TEP ist der verwendete Zeichensatz, im Gegensatz zur DTMF-Signalisierung, nicht mehr auf Ziffern eingeschränkt. Darüber hinaus ist nun ein bidirektionaler Datenaustausch möglich. Gleichzeitig ist eine Vielzahl verschiedener datenfähiger Endgeräte unterstützbar. Es werden hierbei keine oder nur geringe Anforderungen an das Endgerät gestellt. Hierdurch sind keine speziellen Endgeräte notwendig, und es können bereits bekannte Kommunikationsendgeräte eingesetzt werden, z.B. ein mit einem Wählmodem oder ISDN-Adapter ausgestatteter PC, der über eine Terminal-Emulation verfügt, Auch ist beispielsweise für ein Mobiltelefon mit alphanumerischen Display die Nutzung eines Terminal-Protokolls realisierbar. Darüber hinaus kann die Anbindung an beliebig komplexe Endgeräte-Schnittstellen angepaßt werden, wobei die netzseitige Schnittstelle zur Dienststeuerstation hin nicht betroffen ist. Die vielfältigen Schnittstellen zu Datendiensten und Anwendungsprotokollen sind als Datenumsetzfunktionen DMF aus der Dienststeuerstation ausgelagert. Sie können modular gestaltet und nach Bedarf im Netz bereitgestellt werden.

Anders als die im Mobilfunk einsetzbare USSD-Signalisierung kann die erfindungsgemäße Methode universell und netzübergreifend eingesetzt werden. In einem solchen Fall kann beispielsweise die Anschlußverbindung zu einem anderen Netz ebenso wie ein Endgeräteanschluß behandelt werden, freilich mit einem geeignet gewählten Datenprotokoll. Da die Anbindung über ein Intelligentes Peripheriegerät erfolgt, zu dem eine Verbindung geschaltet wird, ist die Erfindung unabhängig vom Basisnetz und der dort verwendeten Zwischenamtssignalisierung verwendbar. Sie kann als besonderer Fall auch in einer sogenannten IN-Overlay-Konfiguration eingesetzt werden, in der nicht alle Netzknoten mit der Funktionalität einer Vermittlungsstelle eines Intelligenten Netzes ausgestattet sind.

Die Erfindung ist selbstverständlich nicht auf die genannten Anwendungsbeispiele und ebenfalls nicht auf die Verwendung eines INAP-Protokolls, eingeschränkt, sondern eignet sich für Intelligente Netze im allgemeinen im Sinne der unabhängigen Ansprüche 1 und 8.

## Patentansprüche

1. Verfahren zum Austausch anwendungsspezifischer Daten in einem Intelligenten Netz (INW) zwischen einem Endgerät (TEG) und einer zur Ausführung von Diensten des Netzes (INW) vorgesehenen Dienststeuerstation (SCP), welche zum Datenaustausch ein Dienstprotokoll (DAP) verwendet,
**dadurch gekennzeichnet,**
**daß** der Datenaustausch in dem Netz (INW) über eine Datenumsetzfunktion (DMF) erfolgt, welche
- eine Zuordnungsfunktion (MAF) enthält, die von der in der Dienststeuerstation (SCP) enthaltenen Dienstfunktion (SCF) Steuerinformationen über die Art des vom Endgerät (TEG) verwendeten Datenformat (TEP) erhält und
- Funktionen bereitstellt, um zum Endgerät (TEG) hin das Datenübertragungsprotokoll (TEP, TPP) und auf diesem aufbauend ein Applikationsprotokoll (ATL) zu realisieren, wobei das anwendungsspezifische Applikationsprotokoll zu der Dienststation hin auf das Protokoll der auszuführenden Dienstfunktion (SCF) der Dienststeuerstation (SCP) abgebildet wird, und
- vom Endgerät (TEG) gesendete Daten über eine erste Schnittstelle (TPP) empfängt, entsprechend der von der Dienstfunktion (SCF) enthaltenen Information in das dem Dienstprotokoll (DAP) entsprechende Datenformat umsetzt und an die Dienststeuerstation (SCP) sendet, sowie
- Daten in dem Dienstprotokoll (DAP) von der Dienststeuerstation (SCP) über eine zweite Schnittstelle (CCS7) empfängt, entsprechend der von der Dienstfunktion (SCF) erhaltenen Information in ein von dem Endgerät (TEG) auswertbares Datenformat (TEP) umsetzt und dem Endgerät (TEG) sendet.

2. Verfahren nach Anspruch 1,
**dadurch gekennzeichnet, daß** eine Vermittlungsstation des Netzes (INW) oder eine ihr zugeordnete Vorrichtung die Datenumsetzfunktion (DMF) ausführt.

3. Verfahren nach Anspruch 2,
**dadurch gekennzeichnet, daß** die Datenumsetzfunktion (DMF) als eine Diensthilfsfunktion der Vermittlungsstation abläuft.

4. Verfahren nach einem der Ansprüche 1 bis 3,
**dadurch gekennzeichnet, daß** die Kommunikation der Datenumsetzfunktion (DMF) mit dem Endgerät (TEG) mittels eines Intelligenten Peripheriegerätes (MIP) erfolgt,

5. Verfahren nach einem der Ansprüche 1 bis 4,
**dadurch gekennzeichnet, daß** die Datenumsetzfunktion (DMF) die Zuordnungsfunktion (MAF) zum Umsetzen des Dienstprotokolles (DAP) und des Datenformats (TEP) des Endgerätes ineinander verwendet.

6. Verfahren nach einem der Ansprüche 1 bis 5,
**dadurch gekennzeichnet, daß** in dem Endgerät (TEG) eine Anwendung betrieben wird, die mit in der Dienststeuerstation (SCP) ablaufenden Diensten Daten austauscht.

7. Verfahren nach einem der Ansprüche 1 bis 6,
**dadurch gekennzeichnet , daß** die Datenumsetzfunktion (DMF) von der Dienststeuerstation (SCP) aktiviert wird.

8. Vorrichtung (DMF) zum Austausch anwendungsspezifischer Daten in einem Intelligenten Netz (INW) zwischen einem Endgerät (TEG) und einer zur Ausführung von Diensten des Netzes (INW) vorgesehenen Dienststeuerstation (SCP), welche zum Datenaustausch ein Dienstprotokoll (DAP) verwendet,
**dadurch gekennzeichnet, daß** sie
- eine Vorrichtung zur Durchführung einer Zuordnungsfunktion (MAF) enthält, die von der Dienstesteuerstation (SCP) Steuerinformationen über die Art des im Endgerät verwendeten Dateiformats erhält, und
- eine netzseitige Sende- und Empfangseinrichtung (CCS7) enthält, die eine erste Schnittstelle aufweist, über welche der Datenaustausch in dem Dienstprotokoll (DAP) mit der Dienststeuerstation (SCP) erfolgt und,
- eine periphere Sende- und Empfangseinrichtung (TPP) enthält, die eine zweite Schnittstelle aufweist, über die der Datenaustausch mit dem Endgerät (TEG) in einem von dem Endgerät auswertbarem Datenformat (TEP) erfolgt, und
- eine Vorrichtung zur Durchführung einer Funktion enthält, die zum Endgerät (TEG) hin das Datenübertragungsprotokoll (TEP, TPP) und auf diesem aufbauend ein Applikationsprotokoll (ATL) realisiert, wobei das anwendungsspezifische Applikationsprotokoll zu der Dienststation hin auf das Protokoll der auszuführenden Dienstfunktion (SCF) der Dienststeuerstation (SCP) abgebildet wird.

9. Vorrichtung nach Anspruch 8,
**dadurch gekennzeichnet, daß** sie in einer Vermittlungsstelle des Netzes (INW) vorgesehen oder dieser zugeordnet ist.

10. Vorrichtung nach Anspruch 8 oder 9,
**dadurch gekennzeichnet, daß** als periphere Sendeund Empfangseinrichtung ein Intelligentes Peripheriegerät (MIP) eingerichtet ist.

11. Vorrichtung nach einem der Ansprüche 8 bis 10,
**dadurch gekennzeichnet, daß** die Zuordnungsvorrichtung (MAF) zum Umsetzen des Dienstprotokolles (DAP) und des Datenformats (TEP) des Endgerätes ineinander vorgesehen ist.

12. Vorrichtung nach einem der Ansprüche 8 bis 11,
**dadurch gekennzeichnet, daß** sie von der Dienststeuerstation (SCP) aktivierbar ist.

## Claims

1. Method for exchanging application-specific data in an intelligent network (INW) between a terminal (TEG) and a service control station (SCP) which is provided for executing services of the network (INW) and uses a service protocol (DAP) for exchanging data, **characterized in that** the exchange of data in the network (INW) is carried out by means of a data conversion function (DMF) which
- contains a mapping function (MAF) which receives, from the service function (SCF) contained in the service control station (SCP), control information relating to the type of data format (TEP) used by the terminal (TEG), and
- makes available functions in order to implement the data transmission protocol (TEP, TPP) for transmitting to the terminal (TEG) and an application protocol (ATL) on the basis of said data transmission protocol (TEP, TPP), the application-specific application protocol being mapped to the service station onto the protocol of the service function (SCF) of the service control station (SCP) which is to be carried out, and
- receives via a first interface (TPP) data transmitted by the terminal (TEG), converts it into the data format corresponding to the service protocol (DAP) in accordance with the information received from the service function (SCF), and transmits it to the service control station (SCP), and
- receives data in the service protocol (DAP) from the service control station (SCP) via a second interface (CCS7), converts it, in accordance with the information received from the service function (SCF), into a data format (TEP) which can be evaluated by the terminal (TEG) and transmits it to the terminal (TEG).

2. Method according to Claim 1, **characterized in that** a switching station of the network (INW) and/or a device assigned to it executes the data conversion function (DMF).

3. Method according to Claim 2, **characterized in that** the data conversion function (DMF) runs as a service resource function of the switching station.

4. Method according to one of Claims 1 to 3, **characterized in that** the communication of the data conversion function (DMF) with the terminal (TEG) is carried out by means of an intelligent peripheral unit (MIP).

5. Method according to one of Claims 1 to 4, **characterized in that** the data conversion function (DMF) uses a mapping function (MAF) for converting the service protocol (DAP) into the data format (TEP) of the terminal, and vice versa.

6. Method according to one of Claims 1 to 5, **characterized in that** an application which exchanges data with the services running in the service control station (SCP) is operated in the terminal (TEG).

7. Method according to one of Claims 1 to 6, **characterized in that** the data conversion function (DMF) is activated by the service control station (SCP).

8. Device (DMF) for exchanging application-specific data in an intelligent network (INW) between a terminal (TEG) and a service control station (SCP) which is provided for executing services of the network (INW) and which is used as a service protocol (DAP) for exchanging data, **characterized in that** it
- contains a device for carrying out a mapping function (MAF) which obtains control information from the service control station (SCP) relating to the type of file format used in the terminal, and
- contains a network-end transceiver device (CCS7) which has a first interface via which the exchange of data in the service protocol (DAP) with the service control station (SCP) takes place, and
- contains a peripheral transceiver (TPP) which has a second interface via which the data is exchanged with the terminal (TEG) in a data format (TEP) which can be evaluated by the terminal, and
- contains a device for carrying out a function which implements the data transmission protocol (TEP, TPP) for transmitting to the terminal (TEG) and implements an application protocol (ATL) on the basis of said data transmission protocol (TEP, TPP), the application-specific application protocol being mapped to the service station onto the protocol of the service function (SCF) of the service control station (SCP) which is to be carried out.

9. Device according to Claim 8, **characterized in that** it is provided in a switching office of the network (INW) or is assigned thereto.

10. Device according to Claim 8 or 9, **characterized in that** an intelligent peripheral unit (MIP) is designed as a peripheral transceiver.

11. Device according to one of Claims 8 to 10, **characterized in that** the mapping device (MAF) is provided for converting the service protocol (DAP) into the data format (TEP) of the terminal, and vice versa.

12. Device according to one of Claims 8 to 11, **characterized in that** it can be actuated by the service control station (SCP).

## Revendications

1. Procédé pour échanger des données orientées spécifiquement utilisation dans un réseau intelligent (INW) entre un terminal (TEG) et une station de contrôle de services (SCP) prévue pour exécuter des services du réseau (INW), laquelle utilise pour l'échange de données un protocole de service (DAP), **caractérisé en ce que** l'échange de données dans le réseau (INW) se fait par l'intermédiaire d'une fonction de conversion de données (DMF) laquelle
- comprend une fonction d'attribution (MAF) qui reçoit par la fonction de service (SCF) contenue dans la station de contrôle de services (SCP) des informations de contrôle concernant le type du format de données (TEP) utilisé par le terminal (TEG) et
- fournit des fonctions permettant de réaliser en direction du terminal (TEG) le protocole de transfert de données (TEP, TPP) et sur la base de celui-ci un protocole d'application (ATL), ledit protocole d'application orienté spécifiquement utilisation en direction de la station de service étant représenté sur le protocole de la fonction de service à exécuter (SCF) de la station de contrôle de services (SCP), et
- reçoit des données émises par le terminal (TEG) via une première interface (TPP), les convertit en fonction de l'information reçue par la fonction de service (SCF) en un format de données correspondant au protocole de service (DAP) et les envoie à la station de contrôle de services (SCP), et
- reçoit des données contenues dans le protocole de service (DAP) par la station de contrôle de services (SCP) via une deuxième interface (CCS7), les convertit en fonction de l'information reçue par la fonction de service (SCF) en un format de données (TEP) exploitable par le terminal (TEG) et les envoie audit terminal (TEG).

2. Procédé selon la revendication 1, **caractérisé en ce qu'**une station de commutation du réseau (INW) ou un dispositif affecté à celle-ci exécute la fonction de conversion de données (DMF).

3. Procédé selon la revendication 2, **caractérisé en ce que** la fonction de conversion de données (DMF) est exécutée comme une fonction auxiliaire de service de la station de commutation.

4. Procédé selon l'une des revendications 1 à 3, **caractérisé en ce que** la communication de la fonction de conversion de données (DMF) avec le terminal (TEG) se fait au moyen d'une unité périphérique intelligente (MIP).

5. Procédé selon l'une des revendications 1 à 4, **caractérisé en ce que** la fonction de conversion de données (DMF) utilise la fonction d'attribution (MAF) pour convertir le protocole de service (DAP) en un format de données (TEP) du terminal.

6. Procédé selon l'une des revendications 1 à 5, **caractérisé en ce qu'**une application est exploitée dans le terminal (TEG), qui échange des données avec des services exécutés dans la station de contrôle de services (SCP).

7. Procédé selon l'une des revendications 1 à 6, **caractérisé en ce que** la fonction de conversion de données (DMF) est activée par la station de contrôle de services (SCP).

8. Dispositif (DMF) pour échanger des données orientées spécifiquement utilisation dans un réseau intelligent (INW) entre un terminal (TEG) et une station de contrôle de services (SCP) prévue pour exécuter des services du réseau (INW), laquelle utilise pour l'échange de données un protocole de service (DAP), **caractérisé en ce qu'**il comprend
- un dispositif pour exécuter une fonction d'attribution (MAF), qui reçoit par la station de contrôle de services (SCP) des informations de contrôle concernant le type du format de fichier utilisé dans le terminal, et
- un dispositif d'émission et de réception (CCS7) coté réseau, doté d'une première interface via laquelle se fait l'échange de données dans le protocole de service (DAP) avec la station de contrôle de services (SCP), et
- un dispositif d'émission et de réception (TPP) coté périphérique, doté d'une deuxième interface via laquelle se fait l'échange de données avec le terminal (TEG) dans un format de données (TEP) exploitable par ledit terminal, et
- un dispositif pour exécuter une fonction, qui réalise en direction du terminal (TEG) le protocole de transfert de données (TEP, TPP) et sur la base de celui-ci un protocole d'application (ATL), ledit protocole d'application orienté spécifiquement utilisation en direction de la station de service étant représenté sur le protocole de la fonction de service à exécuter (SCF) de la station de contrôle de services (SCP).

9. Dispositif selon la revendication 8, **caractérisé en ce que** celui-ci est prévu dans un poste de commutation du réseau (INW) ou est affecté à celui-ci.

10. Dispositif selon la revendication 8 ou 9, **caractérisé en ce qu'**une unité périphérique intelligente (MIP) est prévue comme dispositif d'émission et de réception périphérique.

11. Dispositif selon l'une des revendications 8 à 10, **caractérisé en ce que** le dispositif d'attribution (MAF) est prévu pour convertir le protocole de service (DAP) en un format de données (TEP) du terminal.

12. Dispositif selon l'une des revendications 8 à 11, **caractérisé en ce qu'**il est activable par la station de contrôle de services (SCP).
